# EUROPEAN PATENT SPECIFICATION

(11) **EP 0 255 870 B1**
(45) Date of publication and mention of the grant of the patent: **15.09.1993**
(21) Application number: 87109619.4
(22) Date of filing: 03.07.1987
(51) Int. Cl.: C08J 7/04, C08J 5/18, C09D 7/12

(54) **Coated polyolefinic films**
Beschichtete Polyolefinfolie
Pellicule de polyoléfine revêtue

(30) Priority: 04.07.1986 IT 2102886
(43) Date of publication of application: 17.02.1988
(73) Proprietor: Moplefan S.p.A., Milan (IT)
(72) Inventor: Camprincoli, Pierpaolo, Dr., I-05100 Terni (IT); Cardaio, Rino, I-05100 Terni (IT)
(74) Representative: Weinhold, Peter, Dr.

(56) References cited:
- EP-A- 0 092 791
- FR-A- 2 328 558
- GB-A- 1 249 015
- GB-A- 1 590 683
- US-A- 3 088 844
- US-A- 3 753 769

## Description

The present invention relates to coated polyolefin films. More particularly the present invention relates to coated films of crystalline polymers of alpha-olefins, showing excellent physical properties, in particular a high slip and a hot friction factor which is not substantially different from the friction factor at room temperature.

The films of the present invention can be usefully exploited for the manufacture of jars (tupperware), envelopes, bags, vessels (containers) and other manufactured articles for the packaging industry.

Previous patents describe films of crystalline polypropylene, essentially consisting of macromolecules having an isotactic structure and prepared by the aid of stereospecific initiators. Films obtained from crystalline polyolefins, because of their mechanical, protective and optical properties, are materials for which the broadest application field is the packaging field. It is however necessary to modify the thermosealing properties of films and this can be achieved by means of suitable coatings of the supporting film, applied either from solutions or in the molten state, according to laquering or buttering techniques, using (aqueous or organic) solutions or dispersions of the coating agents, or by extrusion or according to the so called "extrusion coating", or also by the coupling of two films, with or without an interposed adhesive. The coating can be associated with the action of a "primer", which is spread on the surface to be coated and which makes easier the adhesion of the coating to the support; the priming treatment can be replaced, or also accompanied, by a preliminary treatment of the supporting film with continuous, non piercing electric disharges, flames or chemical agents of different kind.

Many compounds have already been described as suitable materials for the coating of polyolefin films (with the purpose of making them thermosealable and/or gas-proof, vapor-proof, flavour-proof, etc.), especially polymeric compounds, in particular vinyl, vinylidene, acrylic or methacrylic polymers and copolymers, which can be applied as solution or dispersion in an aqueous or organic solvent, or in the molten state.

US-A-3 753 769 relates to polyolefin films coated with a coating of certain interpolymers based on α,β-monoethylenically unsaturated carboxylic acid, alkyl acrylate and alkyl methacrylate esters and containing from about 30% to about 60% by weight based upon the total weight of said interpolymer, of a hot slip agent consisting of a finely-divided, water-insoluble, inorganic solid selected from silica, diatmoaceous earth, calcium silicate, bentonite and finely-divided clays, said inorganic solid having a particle size between about 10 to about 200 millimicrons (= 0.01 to 0.2 µm)
EP-A-92 791 describes coated polyolefin films having a low adhesion to welding bars. The coating consists of a mixture of certain copolymers and 0.5 to 1.5% by weight of an amine crosslinking agent.

GB-A-1 590 683 is directed to heat sealable coated thermoplastic films. A preferred coating composition contains from 0.1 to 1.0% by weight, based on the interpolymer employed therein, of a finely divided, water-insoluble particulate material having a particle size of from 1 to 5 µm as slip agent.

Polymeric coatings, especially those applied starting from solvents, generally show a low friction factor, at room temperature, at the film/film and at the film/metal interface; said factor, however, tends to increase under supply of heat and this represents an obstacle for the handling of the films on very rapid packaging machines, when the film is at a temperature higher than room temperature, for instance because of the heat of the welding bars.

It was now found that a film, coated with polymeric materials showing a high slip and a film/film and film/metal hot friction factor which does not substantially differ from the friction factor at room temperature, can be obtained by a suitable addition to the coating material.

In its broadest aspect the present invention provides coated polyolefin films showing a high slip and a hot friction factor in the case of film/metal or film/film friction substantially equal to that at room temperature, consisting of a polyolefinic support coated with a polymeric material which is selected from:
(A) blends of 50-90% by weight of a copolymer consisting of 95-85% by weight of a vinyl ester and
   5-15% by weight of an unsaturated acid; and
   50-10% by weight of a terpolymer consisting of 25-40% by weight of at least one alkyl acrylate,
   70-40% by weight of at least one alkyl methacrylate, and
   5-20% by weight of an unsaturated acid;
(B) blends of 50-90% by weight of a copolymer consisting of
   99-85% by weight of a vinyl ester and
   1-15% by weight of an unsaturated acid or a methylol group containing amide of acrylic or methacrylic acid, and
   50-10% by weight of a terpolymer consisting of
   25-40% by weight of an alkyl acrylate,
   70-40% by weight of an alkyl methacrylate, and
   5-20% by weight of an unsaturated acid;
(C) mixtures of the above blends (A) or (B) with from 10 to 40% by weight of a tetrapolymer consisting of
   20-40% by weight of an alkyl acrylate,
   50-40% by weight of an alkyl methacrylate,
   10-20% by weight of a vinylaromatic monomer, and
   5-20% by weight of an unsaturated acid;
   and
(D) vinyl and vinylidene polymers, alone or in admixture with an epoxy resin;
the sum of the percentages of the components of blends (A) to (C) being equal to 100%; and said polymeric material containing as dispersed phase from 0.05 to 10% by weight (based on the total weight of the coating) of a slip agent selected from metals and metal oxides, hydroxides, silicates, hydrosilicate, aluminosilicates and borosilicates, optionally having a zeolitic structure, said slip agent having an average particle size of from 0.1 to 5 µm, and, optionally, anti-blocking agents.

Preferably the slip agent is selected from the metals and the metal oxides_{,} silicates, hydrosilicates, alumino-silicates and borosilicates (optionally showing a zeolitic structure) are selected from (those of) the metals of groups IA, IIA, IIB, IIIB, IVA, VIA and VIII of the Periodic System.

Said slip agent can be in the form of a powder having a density of from 0.1 to 9.0 g/cm³, the particles being optionally in the form of solid or hollow microspheres.

Powdered aluminium or aluminium, barium, boron, calcium, chromium, iron, lead, potassium, silicon, sodium, zinc, zirconium oxides, or mixtures thereof, proved to be particularly suitable, as well as solid or hollow microspheres of glass or ceramic composition, comprising the above mentioned metal oxides, with different ratios of the components. Suitable slip aids, according to the present invention (optionally in the form of microspheres), can also be obtained from natural or synthetic zeolites, glass and derivatives thereof, "fly ash" etc.

If such aids are used in the form of microspheres, one method for their preparation is described by US-A-4,448,599; according to this patent, the quick heating of the zeolitic material causes the evaporation of the crystallization water and the consequent expansion of the microsphere-shaped material.

The composition of the coating, object of the present invention, can be applied from solution or dispersion in water or in an organic solvent, according to known methods, such as spreading, soaking, spraying etc.

The excess of solution or dispersion can be removed by pressing the film between rolls or by the rotogravure system or "reverser" system, by means of a metering bar.

The total thickness of the coating may range from 0.1 to 10 µm generally; the thickness of the applied coating is such as to be sufficient for providing the coated film with the desired properties.

Vinyl and vinylidene polymers particularly suitable for preparing the above coating (D) are vinyl chloride or vinyl acetate polymers and vinyl chloride-vinyl acetate, vinyl chloride-vinylidene chloride or vinylidene chloride-acrylonitrile copolymers. These polymers can be used either alone or as an admixture with an epoxy resin.

The alkyl acrylates and methacrylates suited for preparing the above terpolymers generally contain a low number of carbon atoms, generally not higher than 4, and they preferably are methyl-acrylate, ethyl-acrylate, methyl-methacrylate and ethyl-methacrylate.

The unsaturated acid for the preparation of the above copolymers and/or terpolymers is generally selected from acrylic, methacrylic, maleic and crotonic acid.

The copolymer consisting of a vinyl ester and an amide of the acrylic or methacrylic acid, containing methylol groups can be selected from a wide range of products among which we mention vinyl acetate copolymers, vinyl stearate copolymers etc., with amides such as methylol-acrylamide, methylol-methacrylamide etc.

Before applying the coating material to the polyolefinic support, the support surface is treated as to assure a perfect and strong adhesion to the film and to avoid "peeling" phenomena. This treatment can be performed according to known techniques, such as for instance electric discharge, flame treatment or chemical oxidation.

The coating composition can be applied to unstretched films, to bistretched films or to films stretched in one direction only; in these last two cases the first stretching and the successive stretchings can be carried out after the coating operation.

When a stronger adhesion of the coating is desired (in comparison with the one that can be obtained by treating the film surface by one of the above mentioned methods) an intermediate primer coating can be used for increasing the adhesion of the coating composition to the film surface.

In this case, a continuous coating of a "primer" is applied to the film treated by one of the above mentioned methods, preferably an electron treatment.

In order to prevent the tendency of the films to adhere to each other (when two or more surfaces are compressed by a couple of rolls), it is usual technique to add the coating material in admixture with anti-adhesion agents, known also as antiblocking agents, consisting generally of waxes or of materials like waxes, which melt at a temperature higher than the storage temperature; these agents do not have to be soluble, at the storage temperature, in the coating polymeric material.

Specifical examples are the natural waxes, such as paraffin wax, microcrystalline waxes, carnauba wax, japanese wax, montan wax etc., and the synthetic waxes such as hydrogenated castor oil, chlorinated hydrocarbon waxes, the amides of aliphatic acids having a long alkyl chain etc.

Suitable films for the application of coatings according to the invention, are polyolefin films and in particular films obtained from crystalline, prevailing isotactic polypropylene, films from propylene/ethylene copolymers having a prevailing content of propylene, either of the "random" or of the "block" type, as well as films obtained from polypropylene mixtures or polyethylene mixtures with said copolymers.

Before the extrusion, stabilizers, lubricants, pigments, dyestuffs, antistatic agents, fillers etc., as well as the same inorganic materials above can be added to the polymer.

After the extrusion of the polyolefin film, carried out according to the usual techniques, the film is heated and optionally oriented by stretching, in one or both directions, and once it has undergone the surface treatment, it is coated with the coating composition of the invention.

In order to evaluate the properties of the coating film, the following parameters were considered:
- The adhesion degree of the Coating to the film measured according to a test commonly known as "scotch tape test". According to this test, a segment of an adhesive cellulosic tape is applied by pressing it on the surface of the coated film and then the tape is quickly removed from said surface; coatings showing very good adhesion remain strongly attached to the supports, whereas those showing a poor or bad adhesion are wholly or partially removed by the support.
- The film/film and film/metal friction factor was determined by means of an apparatus generally known as TMI Slip & Friction tester (model 98/5) at 25°C, 50°C, 60°C, 70°C and 80°C, according to the process described in ASTM-D-1894-63.

Some examples follow to illustrate the invention without limiting it in any way.

### Example 1

A stretched polypropylene film, having melt flow index (MFI) = 2.5; ashes = 35 ppm; residue after heptane extraction = 97.6%; and thickness after stretching = 25 µm, underwent an electron treatment (by means of a device commercially known as SCAE) and was coated, on one side only, by means of a common type spreader, with a 1% aqueous solution (b.w.) of polyethylenimine (primer). The coated film was then dried in an oven and coated with a second layer consisting of the aqueous dispersion (25% b.w.) of a composition comprising:
- 48% by weight of an ethylacrylate/methylmethacrylate/ethylmethacrylate/methacrylic acid copolymer (ratios by weight:30/35/25/10), having acidity number = 10 and viscosity = 50 mPa.s , measured (at 20°C) in a 30% b.w. solution of ethylacetate;
- 23% by weight of a methylmethacrylate/2-methylhexylacrylate/styrene/methacrylic acid copolymer (ratios by weight: 40/35/15/10), having acidity number = 110 and weight average molecular weight M̅_{w} = 210,000;
- 23% by weight of a vinylacetate/methylolacrylamide copolymer (weight ratio: 99/1);
- 5.5% by weight of carnauba wax, dispersed in water;
- 0.5% by weight of powdered aluminium metal, its particles having an average size of 2.5 µm.

After spreading and after drying at 110°C, the coated film showed the following characteristics:
- coating thickness: 1.5 µm;
- adhesion to the substrate (scotch tape test) = good.

As a comparison, an analogous film was simultaneously prepared, which did not contain (in the coating) the aluminium powder.

The film/film friction factor was as follows:

| Temperature | with additive | without additive |
|---|---|---|
| 25°C | 0.40 | 0.55 |
| 50°C | 0.50 | 1.00 |
| 60°C | 0.80 | 2.00 |
| 70°C | 1.10 | >2.50 |
| 80°C | 1.30 | >2.50 |

The film/metal (stainless steel) friction factor was as follows:

| Temperature | with additive | without addditive |
|---|---|---|
| 25°C | 0.22 | 0.45 |
| 50°C | 0.27 | 0.70 |
| 60°C | 0.30 | 1.15 |
| 70°C | 0.45 | 1.70 |
| 80°C | 0.55 | 2.10 |

### Example 2

A stretched film obtained from a propylene/ethylene random type copolymer, having melt flow index (MFI) = 3, ethylene content = 2.6% by weight and thickness after stretching = 25 µm, underwent an electron treatment and was coated with polyethylenimine as in example 1.

The film was then dried in an oven and coated with a second layer consisting of the aqueous dispersion (25% by weight) of a composition comprising:
- 76.5% by weight of the vinylacetate/methylolacrylamide copolymer of example 1;
- 18% by weight of the ethylacrylate/methylmethacrylate/ethylmethacrylate/methacrylic acid copolymer of example 1;
- 5% by weight of carnauba wax, dispersed in water;
- 0.5% by weight of microspheres having an average diameter of 3 µm, density = 1.9 g/cm³ and chemical composition as follows: Al₂O₃/SiO₂/Fe₂O₃ = 37/60/3 (by weight).

After spreading and drying at 110°C, the coated film showed the following properties:
- thickness of the coating: 1.5 µm;
- adhesion (scotch tape): good.

As a comparison, an analogous film was simultaneously prepared, without microspheres in the coating; the friction factors were as follows:

| Temperature | film/film | | film/metal (stainless steel) | |
|---|---|---|---|---|
| | with additive | without additive | with additive | without additive |
| 25°C | 0.35 | 0.50 | 0.20 | 0.40 |
| 50°C | 0.45 | 0.90 | 0.22 | 0.65 |
| 60°C | 0.75 | 1.90 | 0.27 | 1.10 |
| 70°C | 1.00 | >2.50 | 0.40 | 1.60 |
| 80°C | 1.20 | >2.50 | 0.50 | 2.00 |

### Example 3

The film coated with polyethylenimine of example 1 was dried in an oven and coated with a second layer consisting of the aqueous dispersion (18% b.w.) of a composition comprising:
- 76.55% of vinylacetate/crotonic acid copolymer (90/10);
- 18% by weight of the ethylacrylate/methylmethacrylate/ethylmethacrylate/methacrylic acid copolymer of example 1;
- 5% of carnauba wax, dispersed in water;
- 0.5% of aluminium oxide (powder), the particles thereof having an average size of 3 µm.

After spreading and drying at 110°C, the coated film showed the following properties:
- thickness of the coating: 1.5 µm;
- adhesion (scotch tape): good.

As a comparison an analogous film was then prepared, without aluminium oxide in the coating; the friction factors were as follows:

| Temperature | film/film | | film/metal (stainless steel) | |
|---|---|---|---|---|
| | with additive | without additive | with additive | without additive |
| 25°C | 0.45 | 0.60 | 0.25 | 0.50 |
| 50°C | 0.70 | 1.10 | 0.32 | 0.80 |
| 60°C | 0.85 | 2.20 | 0.35 | 1.20 |
| 70°C | 1.20 | >2.50 | 0.55 | 1.80 |
| 80°C | 1.40 | >2.50 | 0.65 | 2.30 |

### Example 4

The film coated with polyethylenimine of example 1 was dried in an oven and coated with a second layer consisting of a solution (25% b.w. in methylethylketone) of a composition comprising:
- 78% by weight of a vinylchloride/vinylacetate copolymer (85/15);
- 16% by weight of a (bisphenol A/epichlorohydrin) epoxy resin;
- 5.5% of carnauba wax;
- 0.5% by weight of zirconium oxide, the particles thereof having an average size of 3.5 µm.

After spreading and drying at 90°C, the coated film showed the following characteristics:
- thickness of the coating: 1.5 µm;
- adhesion (scotch tape): good.

As a comparison an analogous film was simultaneously prepared, without additive in the coating; the friction factors were as follows:

| Temperature | film/film | | film/metal (stainless steel) | |
|---|---|---|---|---|
| | with additive | without additive | with additive | without additive |
| 25°C | 0.30 | 0.40 | 0.20 | 0.35 |
| 50°C | 0.40 | 0.80 | 0.20 | 0.60 |
| 60°C | 0.70 | 1.80 | 0.25 | 1.00 |
| 70°C | 0.90 | >2.50 | 0.35 | 1.50 |
| 80°C | 1.10 | >2.50 | 0.50 | 2.00 |

## Claims

1. Coated polyolefin films showing a high slip and a hot friction factor in the case of film/metal or film/film friction substantially equal to that at room temperature, consisting of a polyolefinic support coated with a polymeric material which is selected from:
(A) blends of 50-90% by weight of a copolymer consisting of 95-85% by weight of a vinyl ester and
5-15% by weight of an unsaturated acid; and
50-10% by weight of a terpolymer consisting of 25-40% by weight of at least one alkyl acrylate,
70-40% by weight of at least one alkyl methacrylate, and
5-20% by weight of an unsaturated acid;
(B) blends of 50-90% by weight of a copolymer consisting of
99-85% by weight of a vinyl ester and
1-15% by weight of an unsaturated acid or a methylol group containing amide of acrylic or methacrylic acid, and
50-10% by weight of a terpolymer consisting of
25-40% by weight of an alkyl acrylate,
70-40% by weight of an alkyl methacrylate, and
5-20% by weight of an unsaturated acid;
(C) mixtures of the above blends (A) or (B) with from 10 to 40% by weight of a tetrapolymer consisting of
20-40% by weight of an alkyl acrylate,
50-40% by weight of an alkyl methacrylate,
10-20% by weight of a vinylaromatic monomer, and
5-20% by weight of an unsaturated acid;
and
(D) vinyl and vinylidene polymers, alone or in admixture with an epoxy resin;
the sum of the percentages of the components of blends (A) to (C) being equal to 100%; and said polymeric material containing as dispersed phase from 0.05 to 10% by weight (based on the total weight of the coating) of a slip agent selected from metals and metal oxides, hydroxides, silicates, hydrosilicates, aluminosilicates and borosilicates, optionally having a zeolitic structure, said slip agent having an average particle size of from 0.1 to 5 µm, and, optionally, anti-blocking agents.

2. Films according to claim 1, wherein the metal and the metal oxides, hydroxides, silicates and borosilicates are selected from (those of) the metals of groups IA, IIA, IIB, IIIB, IVA, VIA and VIII of the Periodic System.

3. Films according to claim 1 or 2, wherein said slip agent is in the form of a powder having a density of from 0.1 to 9.0 g/cm³, the particles being optionally in the form of solid or hollow microspheres.

4. Films according to any one of the preceding claims, wherein the polyolefinic supports are selected from crystalline polyolefins, in particular prevailingly isotactic polypropylene, crystalline propylene/ethylene random or block copolymers prevailingly containing propylene and mixtures of said copolymers with polyethylene and/or polypropylene.

5. Films according to any one of the preceding claims, wherein the slip agent is selected from aluminium metal and oxides of aluminium, barium, boron, calcium, chromium, iron, lead, potassium, silicium, sodium, zinc and zirconium; and mixtures thereof.

6. Films according to claim 5, wherein the slip agent consists of solid or hollow microspheres, having a glass or ceramic composition and comprising said oxides in varying ratios.

7. Films according to any one of the preceding claims, wherein the slip agent consists of microspheres obtained from zeolites, glass or "fly-ash".

8. Films according to any one of the preceding claims, wherein the coating has a thickness of from 0.1 to 10 µm.

9. Films according to any one of the preceding claims, wherein the matrix of the coating consists of vinyl and vinylidene polymers selected from polyvinylchloride, polyvinylacetate and vinylchloride-vinylacetate, vinylchloride-vinylidene chloride and vinylidene chloride-acrylonitrile copolymers, alone or in admixture with an epoxy resin.

10. Films according to claim 1, wherein the epoxy resin of the polymeric material (D) is a bisphenol A-epichlorohydrin epoxy resin.

## Patentansprüche

1. Beschichtete Polyolefinfolien mit einer hohen Gleitfähigkeit und einem Heißreibungsfaktor im Fall der Folien/Metall- oder Folien/Folien-Reibung, der im wesentlichen gleich demjenigen bei Raumtemperatur ist, bestehend aus einem polyolefinischen Träger, der mit einem polymeren Material beschichtet ist, das ausgewählt ist aus:
(A) Mischungen aus 50 bis 90 Gew.-% eines Copolymers, bestehend aus 95 bis 85 Gew.-% eines Vinylesters und
5 bis 15 Gew.-% einer ungesättigten Säure und
50 bis 10 Gew.-% eines Terpolymers, bestehend aus 25 bis
40 Gew.-% mindestens eines Alkylacrylates,
70 bis 40 Gew.-% mindestens eines Alkylmethacrylates und
5 bis 20 Gew.-% einer ungesättigten Säure;
(B) Mischungen aus 50 bis 90 Gew.-% eines Copolymers, bestehend aus
99 bis 85 Gew.-% eines Vinylesters und
1 bis 15 Gew.-% einer ungesättigten Säure oder eines methylolgruppenhaltigen Amids einer Acryl- oder Methacrylsäure und
50 bis 10 Gew.-% eines Terpolymers, bestehend aus
25 bis 40 Gew.-% eines Alkylacrylates,
70 bis 40 Gew.-% eines Alkylmethacrylates und
5 bis 20 Gew.-% einer ungesättigten Säure;
(C) Mischungen der obigen Gemische (A) oder (B) mit 10 bis 40 Gew.-% eines Tetrapolymers, bestehend aus
20 bis 40 Gew.-% eines Alkylacrylates,
50 bis 40 Gew.-% eines Alkylmethacrylates,
10 bis 20 Gew.-% eines vinylaromatischen Monomers und
5 bis 20 Gew.-% einer ungesättigten Säure;
und
(D) Vinyl- und Vinylidenpolymeren, allein oder in Mischung mit einem Epoxyharz;
wobei die Summe der Prozentsätze der Komponenten der Gemische (A) bis (C) gleich 100 % ist und das polymere Material als dispergierte Phase 0,05 bis 10 Gew.-% (bezogen auf das Gesamtgewicht der Beschichtung) eines Gleitmittels, ausgewählt aus Metallen und Metalloxiden, -hydroxiden, Silicaten, Hydrosilicaten, Aluminosilicaten und Borsilicaten, wahlweise mit Zeolithstruktur, und das Gleitmittel eine durchschnittliche Teilchengröße von 0,1 bis 5 µm hat, und fakultativ Antiblockiermittel enthält.

2. Folien nach Anspruch 1, Worin das Metall und die Metalloxide, -hydroxide, Silicate und Borsilicate von den Metallen der Gruppen IA, IIA, IIB, IIIB, IVA, VIA und VIII des Periodensystems ausgewählt sind.

3. Folien nach Anspruch 1 oder 2, worin das Gleitmittel in Form eines Pulvers mit einer Dichte von 0,1 bis 9,0 g/cm³ vorliegt, wobei die Teilchen wahlweise in Form fester oder hohler Mikrokügelchen vorliegen.

4. Folien nach irgendeinem der vorhergehenden Ansprüche, worin die polyolefinischen Träger aus kristallinen Polyolefinen, insbesondere vorherrschend isotaktischem Polypropylen, hauptsächlich propylenhaltigen, kristallinen, statistischen Propylen/Ethylen-Copolymeren oder Blockcopolymeren und Mischungen dieser Copolymere mit Polyethylen und/oder Polypropylen ausgewählt sind.

5. Folien nach irgendeinem der vorhergehenden Ansprüche, worin das Gleitmittel aus Aluminiummetall und Oxiden von Aluminium, Barium, Bor, Calcium, Chrom, Eisen, Blei, Kalium, Silicium, Natrium, Zink und Zirkonium und deren Mischungen ausgewählt ist.

6. Folien nach Anspruch 5, worin das Gleitmittel aus festen oder hohlen Mikrokügelchen aus Glas oder Keramikzusammensetzung besteht und die Oxide in unterschiedlichen Verhältnissen umfaßt.

7. Folien nach irgendeinem der vorhergehenden Ansprüche, worin das Gleitmittel aus Mikrokügelchen besteht, die aus Zeolithen, Glas oder Flugasche erhalten wurden.

8. Folien nach irgendeinem der vorhergehenden Ansprüche, worin die Beschichtung eine Dicke von 0,1 bis 10 µm hat.

9. Folien nach irgendeinem der vorhergehenden Ansprüche, worin die Matrix der Beschichtung aus Vinyl- und Vinylidenpolymeren, ausgewählt aus Polyvinylchlorid, Polyvinylacetat und Vinylchlorid-Vinylacetat-, Vinylchlorid-Vinylidenchlorid- und Vinylidenchiorid-Acrylnitril-Copolymeren, allein oder in Mischung mit einem Epoxyharz, besteht.

10. Folien nach Anspruch 1, worin das Epoxyharz des polymeren Materials (D) ein Bisphenol A-Epichlorhydrin-Epoxyharz ist.

## Revendications

1. Films de polyoléfine revêtus, présentant un coefficient de glissement élevé et un coefficient de frottement à chaud dans le cas d'un frottement film/métal ou film/film qui est sensiblement identique à celui que l'on a à la température ambiante, ce film étant constitue d'un support polyoléfinique revêtu d'un matériau polymère choisi parmi:
(A) les mélanges:
- de 50 à 90% en poids d'un copolymère constitué de 95 à 85% en poids d'un ester vinylique et de 5 à 15% en poids d'un acide insaturé, et
- de 50 à 10% en poids d'un terpolymère constitué de 25 à 40% en poids d'au moins un acrylate d'alkyle, de 70 à 40% en poids d'au moins un méthacrylate d'alkyle et de 5 à 20% en poids d'un acide insaturé;
(B) les mélanges:
- de 50 à 90% en poids d'un copolymère constitué de 99 à 85% en poids d'un ester vinylique et de 1 à 15% en poids d'un acide insaturé ou d'une amide de l'acide acrylique ou de l'acide méthacrylique, contenant un groupe méthylol, et
- de 50 à 10% en poids d'un terpolymère constitué de 25 à 40% en poids d'acrylate d'alkyle, de 70 à 40% en poids d'un méthacrylate d'alkyle et de 5 à 20% en poids d'un acide insaturé;
(C) les mélanges des mélanges (A) ou (B) ci-dessus avec de 10 à 40% en poids d'un tétrapolymère constitué de 20 à 40% en poids d'un acrylate d'alkyle, de 50 à 40% en poids d'un méthacrylate d'alkyle, de 10 à 20% en poids d'un monomère vinylaromatique et de 5 à 20% en poids d'un acide insaturé; et
(D) les polymères vinyliques et de vinylidène, seuls ou mélangé avec une résine époxy;
la somme des pourcentages des composants des mélanges (A) à (C) étant égale à 100%, ledit matériau polymère contenant sous forme de phase dispersée de 0,05 à 10% en poids (par rapport au poids total du revêtement) d'un agent de glissement choisi parmi les métaux et les oxydes, hydroxydes, silicates, hydrosilicates, aluminosilicates et borosilicates métalliques, ayant éventuellement une structure zéolitique, ledit agent de glissement ayant une granulométrie moyenne de 0,1 à 5 µm, et contenant éventuellement des agents antiadhérence.

2. Films selon la revendication 1, dans lesquels le métal et les oxydes, hydroxydes, silicates et borosilicates métalliques sont choisis de façon que les métaux appartiennent aux groupes IA, IIA, IIB, IIIB, IVA, VIA et VIII du tableau périodique.

3. Films selon la revendication 1 ou 2, dans lesquels ledit agent de glissement se présente sous la forme d'une poudre ayant une masse volumique de 0,1 à 9,0 g/cm³, les particules se présentant éventuellement sous la forme de microsphères pleines ou creuses.

4. Films selon l'une quelconque des revendications précédentes, dans lesquels les supports polyoléfiniques sont choisis parmi les polyoléfines cristallines, en particulier le polypropylène essentiellement isotactique, les copolymères cristallins statistiques ou séquencés propylène/éthylène contenant essentiellement du propylène, et les mélanges de ces copolymères avec le polyéthylène et/ou le polypropylène.

5. Films selon l'une quelconque des revendications précédentes, dans lesquels l'agent de glissement est choisi parmi l'aluminium métallique et les oxydes d'aluminium, de baryum, de bore, de calcium, de chrome, de fer, de plomb, de potassium, de silicium, de sodium, de zinc et de zirconium; et leurs mélanges.

6. Films selon la revendication 5, dans lesquels l'agent de glissement est constitué de microsphères pleines ou creuses ayant une composition de verre ou de céramique et comprenant lesdits oxydes selon différentes proportions.

7. Films selon l'une quelconque des revendications précédentes, dans lesquels l'agent de glissement est constitué de microsphères obtenues à partir de zéolites, de verre ou de cendres volantes.

8. Films selon l'une quelconque des revendications précédentes, dans lesquels le revêtement a une épaisseur de 0,1 à 10 µm.

9. Films selon l'une quelconque des revendications précédentes, dans lesquels la matrice de revêtement est constituée de polymères vinyliques et de polymères de vinylidène choisis parmi le poly(chlorure de vinyle), le poly(acétate de vinyle) et les copolymères chlorure de vinyle/acétate de vinyle, chlorure de vinyle/chlorure de vinylidène et chlorure de vinylidène/acrylonitrile, seuls ou en mélange avec une résine époxy.

10. Films selon la revendication 1, dans lesquels la résine époxy du matériaux polymère (D) est une résine époxy de bisphénol A-épichlorhydrine.
